# EUROPEAN PATENT SPECIFICATION

(11) **EP 0 507 871 B1**
(45) Date of publication and mention of the grant of the patent: **14.08.1996**
(21) Application number: 91902921.5
(22) Date of filing: 03.01.1991
(51) Int. Cl.: C08L 25/18, C08J 3/03, C08J 7/00, C11D 3/37

(54) **RINSE AID FOR PLASTIC AND PAINTED SURFACES**
SPÜLHILFSMITTEL FÜR KUNSTSTOFF- UND LACKOBERFLÄCHEN
AUXILIAIRE DE RINCAGE POUR SURFACES PLASTIQUES ET PEINTES

(30) Priority: 03.01.1990 US 460443
(43) Date of publication of application: 14.10.1992
(73) Proprietor: HENKEL CORPORATION, Ambler, Pennsylvania 19002 (US)
(72) Inventor: CORMIER, Gerald, Troy, MI 48083 (US); LINDERT, Andreas, Troy, MI 48095 (US); PIERCE, John, R., Huntington Wood, MI 48070 (US)
(74) Representative: von Kreisler, Alek, Dipl.-Chem.
(86) International application number: US9100067
(87) International publication number: WO9109904

(56) References cited:
- EP-A- 0 091 166
- EP-A- 0 319 017
- US-A- 4 457 790

## Description

The present invention relates to a rinse aid for plastic and painted surfaces useful as a surface treatment of articles prior to painting thereof. In particular, the invention relates to certain polyphenol compounds formulated with surfactants, aqueous solutions of which provide a hydrophilic, antispotting rinse aid.

In the treatment of articles for subsequent painting or decorative coatings, including metals and plastics, the parts or articles are cleaned with conventional cleaner systems. Plastic and painted surfaces when cleaned with conventional, non-etching, acidic or alkaline cleaner systems, produce a hydrophobic, non-water wettable surface. This non-wettable surface is due to the hydrophobic nature of the surface being treated.

In EP-A-0 319 017 the treatment and after-treatment of metal with carbohydrate-modified polyphenol compounds is described. While a general reference to plastics is made in the field of the invention statement, the invention is described in relation to treatment of metal articles. Other metal treating patent applications and patents are also noted therein, the disclosure of which is expressly incorporated by reference, including issued U.S. Patents 4,517,028; 4,376,000; 4,433,015; and 4,457,790.

It has now been discovered that the derivative of polyphenol compounds can also be formulated for use in the treatment of plastic and painted articles which will eliminate water spotting by providing a water wettable surface and will provide a visual indication of surface cleanliness and uniformity. After removal by current, conventional cleaner systems of soil, oil and contaminants followed by water rinsing, the plastic or painted article is then followed by treatment with a dilute aqueous solution of certain polyphenol compounds. The surface following such treatment or rinse shows a water break-free surface after water rinsing and the residual film on the surface causes no loss of adhesion in subsequent paint operations.

As noted earlier, the polymers employed in the rinse aid herein are certain polyphenol polymers. These may be generally described as a water soluble or dispersible polyvinylphenol polymers containing polyhydroxyl alkylamine functionality resulting from the condensation of an amine or NH₃ with a ketose or aldose followed by reduction to an amine or other alkylaminopolyhydroxy compound having from 3 to 8 carbon atoms. The polymers are employed in the form of an aqueous solution or dispersion thereof, or their salts. The aqueous dispersion or solution will contain an effective amount of the polymer to provide for a water wettable surface. On a weight basis the polymer may be present in the working solution in a concentration by weight of the aqueous solution up to 5%, and preferably in the range of 0.001 to 1.0%.

The polymers employed in this invention are polymers, or copolymers thereof containing at least one unit of the formula (a) or (b) below: 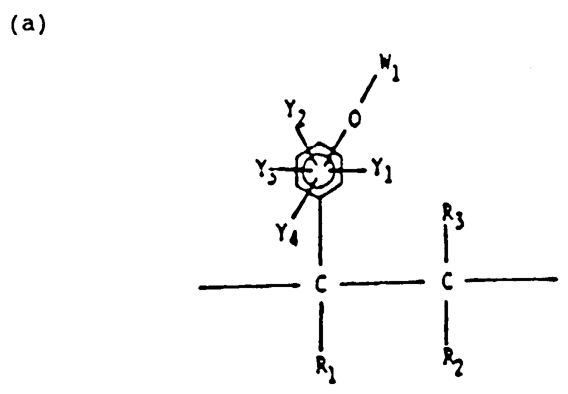 and 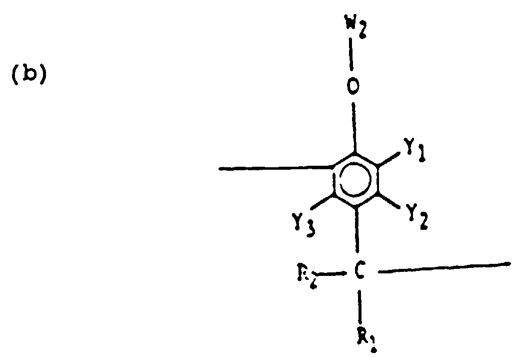 wherein (a):
each of R₁ through R₃ is independently selected for each of said units from the group consisting of hydrogen, an alkyl group having from 1 to 5 carbon atoms, or an aryl group having 6 to 18 carbon atoms;
each of Y₁ through Y₄ is independently selected for each of said units from the group consisting of hydrogen, -CR₁₁R₅OR₆, -CH₂Cl, an alkyl or aryl group having from 1 to 18 carbon atoms, or Z;
Z is 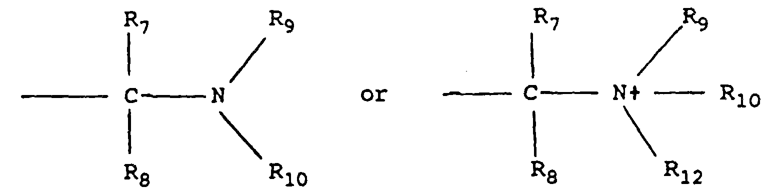 however, at least a fraction of the Y₁, Y₂, Y₃ or Y₄ must be Z and at least a fraction of the substituents R₇ through R₁₂ of said Z must contain a polyhydroxy alkyl-amine functionality resulting from the condensation of an amine or NH₃ and a ketose or aldose followed by reduction to an amine or other alkylaminopolyhydroxy compound having from 3 to 8 carbon atoms;
each of R₅ through R₁₂ is independently selected for each of said units from the group consisting of hydrogen, an alkyl, aryl, hydroxy-alkyl, amino-alkyl, mercapto-alkyl, or phospho-alkyl moiety; R₁₂ can also be -0⁽⁻¹⁾ or -OH, in order to form an amine oxide or a hydroxyl amine;
W₂ is selected for each of said units from the group consisting of hydrogen, an acyl moiety, 3-allyloxy-2-hydroxy-propyl-; 3-benzyloxy-2-hydroxy-propyl-, 3-alkylbenzyloxy-2-hydroxypropyl-, 3-phenoxy-2-hydroxy-propyl-, 3-alkylphenoxy-2-hydroxypropyl-, 3-butoxy-2-hydroxy-propyl, 3-alkyloxy-2-hydroxy-propyl, 2-hydroxy-alkyl-, 2-hydroxy-2-phenyl ethyl-, 2-hydroxy-2-alkyl phenyl ethyl-, benzyl-, alkyl, allyl, 2-chloro-propenyl-, a condensation product of ethylene oxide, propylene oxide, or a mixture thereof;
W₁ has the meaning of W₂ and can additionally be sodium, potassium, tetra aryl ammonium, tetra alkyl ammonium, tetra alkyl phosphonium, or tetra aryl phosphonium.

Preferred final materials are based on a vinyl phenolic moiety or methyl vinyl phenolic moiety. For example, vinyl phenol, isopropenyl phenol and derivatives thereof may be used.

Illustrative of other polymers which are employed in this invention are copolymer materials wherein at least one portion of said copolymer has the structure of (a) defined above wherein W₁, Y₁, through Y₄ and R₁ through R₁₂ are as defined in (a) above and at least a fraction of said portion is polymerized with one or more monomers having a C=C moiety. Useful monomers include those independently selected for each of said units from the group consisting of acrylonitrile, methacrylonitrile, methyl acrylate, methyl methacrylate, vinyl acetate, vinyl methyl ketone, isopropenyl methyl ketone, acrylic acid, methacrylic acid, acrylamide, methacrylamide, n-amyl methacrylate, styrene, m-bromostyrene, p-bromostyrene, diallyldimethylammonium salts, 1,3-butadiene, n-butyl acrylate, tert-butylamino-ethyl methacrylate, n-butyl methacrylate, tert-butyl methacrylate, n-butyl vinyl ether, tert-butyl vinyl ether, m-chlorostyrene, o-chlorostyrene, p-chlorostyrene, n-decyl methacrylate, N,N-diallylmelamine, N,N-di-n-butylacrylamide, di-n-butylitaconate, di-n-butylmaleate, diethylaminoethyl methacrylate, diethyleneglycol monovinyl ether, diethyl fumarate, diethylitaconate, diethyl vinylphosphonate, vinylphosphonic acid, diisobutyl maleate, diisopropyl itaconate, diisopropyl maleate, dimethyl fumarate, dimethyl itaconate, dimethyl maleate, di-n-nonyl fumarate, di-n-nonyl maleate, dioctyl fumarate, di-n-octyl itaconate, di-n-propyl itaconate, n-dodecyl vinylether, ethyl acid fumarate, ethyl acid maleate, ethyl acrylate, ethyl cinnamate, N-ethylmethacrylamide, ethyl methacrylate, ethylvinyl ether, 5-ethyl-2-vinylpyridine, 5-ethyl-2-vinylpyridine-1-oxide, glycidyl acrylate, glycidyl methacrylate, n-hexyl methacrylate, 2-hydroxypropyl methacrylate, isobutyl methacrylate, isobutyl vinyl ether, isoprene, isopropyl methacrylate, isopropyl vinyl ether, itaconic acid, lauryl methacrylate, methacrylamide, methacrylic acid, methacrylonitrile, N-methylolacrylamide, N-methylolmethacrylamide, N-isobutoxymethylacrylamide, N-isobutoxymethylmethacrylamide, N-alkyloxymethylacrylamide, N-alkyloxymethylmethacrylamide, N-vinyl-caprolactam, methylacrylate, N-methylmethacrylamide, α-methylstyrene, m-methylstyrene, o-methylstryrene, p-methylstyrene, 2-methyl-5-vinylpyridine, n-propyl methacrylate, sodium p-styrenesulfonate, stearyl methacrylate, p-styrenesulfonic acid, p-styrenesulfonamide, vinyl bromide, 9-vinylcarbazole, vinyl chloride, vinylidene chloride, 1-vinylnaphthalene, 2-vinylnaphthalene, 2-vinylpyridine, 4-vinylpyridine, 2-vinylpyridine N-oxide, 4-vinylpyrimidine, N-vinylpyrrolidone.

Within such materials, the ratio of any single monomer to any other monomer can be about 1:99 to about 99:1, preferably about 5:1 to about 1:5, and more preferably 1.5:1 to about 1:1.5.

Illustrative of another polymer which may be employed in this invention are condensation polymer materials (a), which are a condensation polymer of polymer materials (a) and/or (b), wherein condensable forms (i.e., modified as noted below) of (a) and/or (b) , or mixtures thereof, are condensed with a second compound selected from the group consisting of phenols (preferably phenol, alkylphenol, arylphenol, cresol, resorcinol catechol, pyrogallol), tannins, (both hydrolyzable and condensed) novolak resins, lignin compounds, together with aldehydes, ketones or mixtures thereof, to produce a condensation resin product, that is a prepolymer of Polymer Material (c). This condensation resin prepolymer product is then further reacted by the addition of "Z" to at least a portion of it by reacting said resin prepolymer product with an aldehyde or ketone and a secondary amine producing a final adduct which can react with an acid and/or can be reacted with hydrogen peroxide to generate an amine oxide. The amine oxide can then be acid neutralized to form the hydroxyl amine if desired.

While this condensation product is described for convenience as being prepared by a sequential reaction, it will be appreciated that these materials can be prepared by carrying out the necessary steps in any order, or simultaneously. However, the sequence described is preferred.

It is appreciated by those skilled in the art, that the alkenylphenolic moieties of the present invention can be either randomly distributed within the copolymer and terpolymer or can be synthesized to constitute a block orientated polymer, depending upon the methods and conditions used for polymerization.

Preferred aldoses, ketoses, and derivatives for use in the above materials include, without limitation, glucose, fructose, alditols, aribanose, mannose, ribose, ribitol. Acids such as aldonic and aldaric acids may also be employed. Disaccharides and polysaccharides that can be easily hydrolyzed under reaction conditions to one or more of the useful aldoses and ketoses may also be employed.

It will be appreciated that the depiction above represents a repeating unit that characterizes the compound or materials of the present invention; no terminating end units are depicted. The end group not depicted of the polymers of the present invention can be selected by the skilled artisan relying upon art-disclosed techniques. For example, the end groups of the polymer may either be those resulting from the specific polymerization process employed or those intentionally added to alter the polymer characteristics. For example, the end groups may be hydrogen, hydroxyl, initiation fragments, chain transfer agents, disproportionation groups, or other similar methods of terminating a growing polymer chain.

The invention relates to the use of an aqueous solution or dispersion of the polymers in a process of treating plastic or painted surfaces by contacting said plastic or painted surface with the polymer solution. In the typical treatment employing the aqueous solution of polymer, the plastic or painted surface to be treated is initially cleaned and water rinsed to remove grease and dirt from the surface. The plastic or painted surface is then brought into contact with the treatment solution of this invention usually by spraying. The treated surface is then water rinsed before being dried for example by air drying (forced air blow-off) or oven drying (flash drying in 93°C (200°F) oven for about 60 seconds), although the treatment may also be applied without water rinsing with good results.

It is highly desirable, but not necessary, to provide or improve the water solubility or water dispersibility of the selected polymer material. In addition to employing the polyhydroxyalkyl-amine functionality, this is preferably done with an acid used for neutralization and/or complexation of a "Z" moiety thereof. Such acids may be organic or inorganic. Useful and preferred acids for this purpose include carbonic acid, acetic acid, citric acid, oxalic acid, ascorbic acid, phenylphosphonic acid, chloromethylphosphonic acid; mono, di and trichloroacetic acid, trifluoroacetic acid, nitric acid, phosphoric acid, hydrofluoric acid, sulfuric acid, boric acid, hydrochloric acid, hexafluorosilicic acid, hexafluorotitanic acid and hexafluorozirconic acid. These may be employed alone or in combination with each other and may be neutralized by conventional acid-base reactions or by complexing. In a highly preferred embodiment, the addition of water to the neutralized, overneutralized or partially neutralized treatment compounds mentioned above results in a water soluble or dispersible solution or emulsion of the polymer useful for treatment.

Alternately, the final polymer material, polyphenol compounds, used in the present invention can be made water soluble or dispersible by neutralization of the phenolic group with an organic or inorganic base. Suitable bases for this purpose include tetraalkylammonium hydroxides such as tetra-butylammonium hydroxide, tetra arylammonium hydroxide, sodium hydroxide and potassium hydroxide.

In a highly preferred embodiment, the final polymer material can be prepared such that the "Z" moiety does not require neutralization, i.e., an amine oxide or the like.

The molecular weight of the polyphenols used in the present invention can be a dimer, but may preferably be low molecular weight oligomers or resinous polymers having molecular weights in the range of about 360 to about 30,000. For use as a rinse aid as in the present invention, the polymer of the formulas set forth hereinabove will typically have molecular weights in the range of about 1,000 to 15,000, with about 5,000 to about 15,000 being preferred.

As a rinse aid treatment composition the polymer is formulated with surfactants to produce a low foaming aqueous solution or dispersion. In the practice of this invention, the preferred surfactant employed is a mixture of an anionic surfactant and a nonionic surfactant to provide a low foaming aqueous dispersion which will result in no spotting during the treatment and will provide a water break-free film after water rinsing. However, any surfactant which provides for low foaming may be employed, including anionic, cationic, amphoteric or nonionic surfactants. Typically in cleaning and rinsing plastic or painted surfaces the water will bead up affording a non-continuous system rendering it difficult to determine if the entire surface is clean from e.g. oil and fingerprints to which subsequent painting would not adhere well. With the treatment of the present invention, a 100% water break-free film is provided after water rinse, which is a continuous water film showing no breaks and, accordingly, no portions of the surface to which paint would not subsequently adhere. In contrast to the 100% water break-free results of the present invention, a broken or discontinuous water film, either beads of water on the surface or spots with no water film, is designated as 0% water break-free, the broken film portions possibly having dirt, grime or oil spots over which the water does not provide a film.

The surfactants employed in this invention, are preferably mixtures of an anionic surfactant and a nonionic surfactant as noted earlier hereinabove. The surfactants must be water soluble or dispersible and preferably provide for low foaming.

The preferred anionic surfactants for use in the present invention are the alkyl sulfates, such as, sodium 2-ethylhexyl sulfate available commercially as Tergitol® 08 from Union Carbide Corporation. Other anionic surfactants of this class are also available from the same supplier in which the alkyl portions of the surfactant contain up to 18 carbon atoms. The preferred nonionic surfactants are the ethoxylated linear alcohols containing 8 to 22 carbon atoms. Antarox® LF 224 is of particular use in this invention which is an ethoxylated linear alcohol containing 8 to 10 carbon atoms and having a propylene oxide cap. Antarox® nonionic surfactants are commercially available from General Aniline and Film. Other nonionic surfactants are the alkyl and alkyl phenyl ethers of polyethylene glycols also available from Union Carbide under the Tergitol® name, in which the alkyl group contains from about 8 to 12 carbon atoms. Illustrative cationic surfactants are the quaternary ammonium compounds, such as trimethyl coco quaternary ammonium chloride available commercially from Sherex under "Adogen®". Illustrative of an amphoteric surfactant is Miranol JEM described as a dicarboxylic octoic derivative sodium salt.

In preparing the rinse aid of the present invention, the surfactants are mixed and the polyphenol polymer added thereto. This is then added to water in an amount to provide the desired concentration for use as the rinse aid. As indicated, a mixture of anionic and nonionic surfactant is preferred. The aqueous dispersion or solution of polymer will contain from on a weight basis about 0.001 to 5.0% polymer, as noted earlier. The surfactant, whether anionic, nonionic, cationic or amphoteric, will be present in an amount of 0.001 to 1% by weight.

In the method of using the rinse aid, the plastic or painted articles are first washed and rinsed, using conventional cleaning solutions. Illustrative of such cleaners are Parco® Plastic Cleaner 2202, a potassium hydroxide, tetrapotassium pyrophosphate cleaner, and Parco® Plastic Cleaner 2501, a phosphoric acid, monoammonium phosphate cleaner, available from Parker-Amchem Division of Henkel Corporation. The articles are generally sprayed with the cleaner and rinsed with warm water after which the rinse aid of the present invention is applied, usually by spraying, although other means of cleaning and rinsing may be employed such as immersion. After application of the rinse aid, the article is rinsed with water, preferably deionized water, and then dried by forced air or oven drying. The invention accordingly includes an improvement in the process of cleaning plastic or painted surfaces wherein a cleaner is applied thereto and rinsed and subsequently dried, the improvement being the application to the plastic or painted surfaces subsequent to the cleaning of said surfaces an aqueous solution or dispersion of the polymer described earlier above.

The invention is particularly useful in the treatment of plastic surfaces such as polycarbonates, polyurethanes and polyesters. The use of the rinse aid of the present invention ensures complete cleaning has resulted and will not detract from adhesion of paints applied to plastic surfaces afterwards, as results of testing show 100% adhesion.

The invention may be further illustrated by means of the following examples in which all parts and percentages are by weight unless otherwise noted.

### EXAMPLE 1

This example will serve to illustrate the preparation of one polymer employed in this invention, the methyl glucamine derivative of a poly-4-vinylphenol polymer, as found in Example I of EP-A-0 319 017 earlier noted.

A resin flask is charged with 400 mls Propasol® P (a propoxylated propane solvent and 160g Resin M (a poly-4-vinylphenol resin obtained from Maruzen® oil MW = 5000). A slurry of 263.3g N-methyglucamine in 400 mls deionized water is added, and the mixture is warmed to 60-65°C while stirring. Next, 100.2 ml of 37% formaldehyde is added over one and one-half hours. The mixture is then warmed to 90°C and held for six hours. After cooling, the mixture is diluted to 9.6% solids with deionized water. The pH of the final solution is 9.1 and the solution comprises an N-methyl-glucamine derivative.

### EXAMPLE 2

The polymer solution of Example 1 was formulated with surfactants to provide a low foaming aqueous dispersion in water. Thus 975.0 parts of the polymer solution were added to a previously combined mixture of 18 parts of Tergitol® 08 (an anionic surfactant, sodium 2-ethylhexyl sulfate) and 7 parts of Antarox® 224 (a nonionic surfactant, an ethoxylated C₈₋₁₀ linear alcohol having a propylene oxide cap). An aqueous solution of the foregoing was prepared in deionized water by adding and mixing the foregoing with 400 parts water to provide a concentration of polymer by weight of 0.023%, and a concentration of surfactant by weight of 0.0045%.

### EXAMPLE 3

The formulated rinse aid was then tested using primed plastic parts. The panel cleaning and testing of the rinse aid was performed using the following test cycle:

| | | |
|---|---|---|
| 1. | Parco® Plastic Cleaner 2202 at 322.47 kg/m³ (oz/gal) | - 90 second spray at 51,6°C (125°F) |
| | or | |
| | Parco® Plastic Cleaner 2501 at 4% by volume | - 90 second spray at 51,6°C (125°F) |
| 2. | Warm water 43,3°C (110°F.) rinse | - 30 second spray |
| 3. | Rinse aid polymer at 0.25% v/v | - 30 second spray at 26,6°C (80°F). |
| 4. | Deionized water rinse | - 30 second spray |
| 5. | Forced air blow off | |

The cycle was carried out both with the rinse aid step 3 and without the rinse aid step. All panels processed without the polymer rinse aid showed 0% water break-free after rinsing. All panels processed with the polymer rinse aid showed 100% water break-free after rinsing.

### EXAMPLE 4

After drying of the panels treated in Example 3, the panels were painted with a paint using BASF Inmont® 8L 395094-Base Coat/Clear Coat system. The panels were allowed to age at ambient conditions for a minimum of 72 hours before adhesion testing was conducted. Adhesion testing on the painted panels was evaluated under the following conditions.
a. After oven aging 7 days at 70°C
b. After 96 hours at 37,7°C (100°F)/ 100% relative humidity
c. After 2 hours 37,7°C (100°F) water immersion
d. After a moisture and cold cycle test
e. After 3 months and 1 year Florida exposure.

All the tests showed 100% adhesion on both the treated and non-treated panels illustrating that the treatment did not interfere with the adhesion of paints to the panels and that the rinse aid showing 100% water break-free provided assurance that no oil or grease was left on the panels after cleaning.

## Claims

1. A composition adapted for use as an aqueous rinse aid solution or dispersion in the treatment of plastic or painted surfaces, said composition comprising at least a surfactant and a water dispersible or water soluble polymer and/or copolymer, wherein said polymer and/or copolymer contains at least one recurring unit selected from the group consisting of 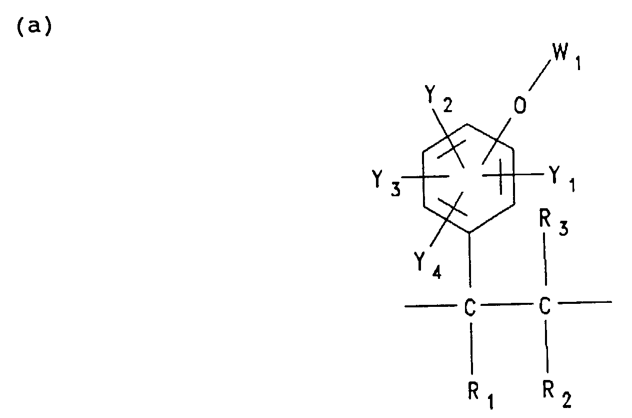 and 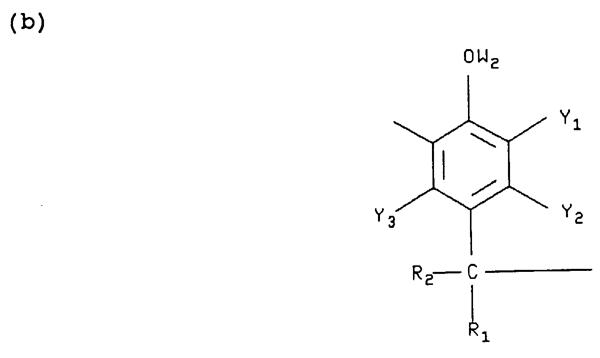 where:
each of R₁ through R₃ is independently selected for each of said units from the group consisting of hydrogen, an alkyl group having from 1 to 5 carbon atoms, or an aryl group having from 6 to 18 carbon atoms;
each of Y₁ through Y₄ is independently selected for said units from hydrogen, -CR₁₁R₅OR₆, -CH₂Cl, an alkyl or aryl group having from 1 to 18 carbon atoms, or Z, wherein at least a fraction of Y₁ through Y₄ is Z;
Z is 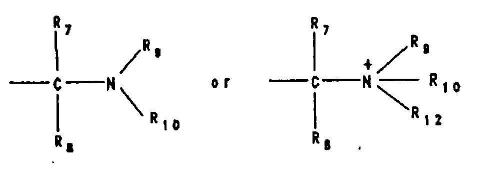
each of R₅ through R₁₂ is independently selected for each of said units from the group consisting of hydrogen, an alkyl, aryl, hydroxy-alkyl, amino-alkyl, mercapto-alkyl, or phospho-alkyl moiety, except that R₁₂ can also be -O(⁻¹) or -OH in order to form an amine oxide or a hydroxyl amine, and wherein at least a fraction of the substituents R₇ through R₁₂ of said Z must contain a polyhydroxy alkylamine functionality resulting from the condensation of an amine or NH₃ and a ketose or aldose, followed by reduction to an amine or other alkylamino polyhydroxy compound having from 3 to 8 carbon atoms;
W₂ is selected for each of said units from the group consisting of hydrogen, an acyl moiety, 3-allyloxy-2-hydroxy-propyl-; 3-benzyloxy-2-hydroxy-propyl-, 3-alkylbenzyloxy-2-hydroxypropyl-, 3-phenoxy-2-hydroxy-propyl-, 3-alkylphenoxy-2-hydroxypropyl-, 3-butoxy-2-hydroxy-propyl, 3-alkyloxy-2-hydroxy-propyl, 2-hydroxy-alkyl-, 2-hydroxy-2-phenyl ethyl-, 2-hydroxy-2-alkyl phenyl ethyl-, benzyl-, alkyl, allyl, 2-chloro-propenyl-, a condensation product of ethylene oxide, propylene oxide, or a mixture thereof;
W₁ has the meaning of W₂ and can additionally be sodium, potassium, tetra aryl ammonium, tetra alkyl ammonium, tetra alkyl phosphonium, or tetra aryl phosphonium.

2. A composition as defined in claim 1 wherein Said water dispersible or water soluble polymer and/or copolymer is made by reacting a poly-4-vinylphenol polymer with formaldehyde and an alkylamine, providing a polyhydroxy alkylamine functionality synthesized by the condensation of an amine or NH₃ with a ketose or aldose followed by reduction to an amine or other alkylaminohydroxy compound having from 3 to 8 carbon atoms.

3. A composition as defined in claim 2, wherein the surfactant is a mixture of an anionic and a nonionic surfactant.

4. A composition as defined in claim 3 wherein said anionic surfactant is an alkylsulfate having from 8 to 18 carbon atoms and said nonionic surfactant is an alkoxylated linear alcohol having from 8 to 22 carbon atoms.

5. A composition as defined in claim 4 wherein said alkyl sulfate is sodium 2-ethyl hexyl sulfate and said ethoxylated linear alcohol contains 8 to 10 carbon atoms.

6. A composition as defined in claim 5, additionally comprising sufficient water that, said water dispersible or water soluble polymer and/or copolymer are present in an amount of 0.001 to 5 % by weight of the composition and said surfactant mixture is present in an amount of 0.001 to 1 % by weight of the composition.

7. A composition as defined in claim 6 in which said polymer and/or copolymer has an average molecular weight of 5,000 - 15,000 and is a Mannich derivative of N-methyl glucamine, formaldehyde, and poly-4-vinyl phenol.

8. A composition as defined in claim 7 in which said water dispersible or water soluble polymer and/or copolymer are present in an amount of 0.001 to 1 % by weight of the composition.

9. A method of treating plastic or painted surfaces prior to subsequent painting thereof wherein said surfaces are cleaned and rinsed by application of a cleaning solution thereto and dried prior to painting, characterized in that subsequent to said cleaning and prior to drying said surfaces are contacted with a composition according to any one of claims 1 - 8, in which the concentration of said polymer and/or copolymer is from 0.001 to 5 % by weight and the concentration of said surfactant component is from 0.001 to 1 % by weight.

10. A method as defined in claim 9 wherein subsequent to said contact with said aqueous solution containing said polymer and/or copolymer, said surface is rinsed with deionized water prior to drying.

## Patentansprüche

1. Zusammensetzung, die für die Verwendung als eine wäßrige Hilfsspülmittel-Lösung oder -Dispersion bei der Behandlung von Kunststoff-Oberflächen oder lackierten Oberflächen angepaßt ist, wobei die Zusammensetzung wenigstens ein Tensid und ein wasserdispergierbares oder wasserlösliches Polymer und/oder Copolymer umfaßt, worin das Polymer und/oder Copolymer wenigstens eine Repetiereinheit enthält, die aus der Gruppe, bestehend aus 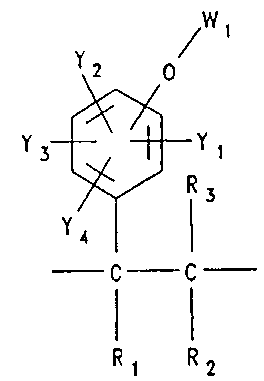 und 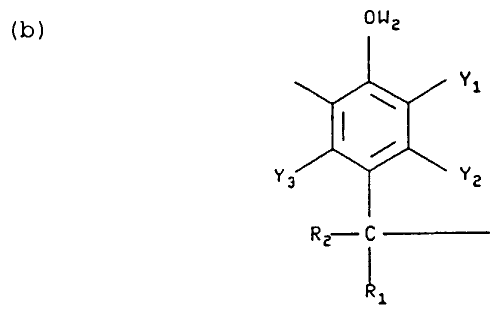 ausgewählt ist, worin
jedes R₁ bis R₃ unabhängig voneinander für jede der genannten Einheiten aus der Gruppe, bestehend aus Wasserstoff, einer Alkylgruppe mit 1 bis 5 Kohlenstoffatomen oder einer Arylgruppe mit 6 bis 18 Kohlenstoffatomen, ausgewählt ist;
jedes Y₁ bis Y₄ unabhängig voneinander für die genannten Einheiten aus Wasserstoff, -CRₙR₅OR₆, -CH₂Cl, einer Alkyl-oder Arylgruppe mit 1 bis 18 Kohlenstoffatomen oder Z ausgewählt ist, worin Z wenigstens ein Teil von Y₁ bis Y₄ ist;
Z 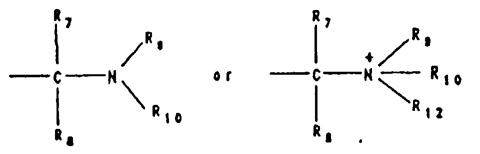 ist;
jedes R₅ bis R₁₂ unabhängig für jede der genannten Einheiten aus der Gruppe, bestehend aus Wasserstoff, einem Alkyl-, Aryl-, Hydroxyalkyl-, Aminoalkyl-, Mercaptoalkyl-oder Phosphoalkyl-Rest, ausgewählt ist, außer, daß R₁₂ auch -(O)⁽⁻¹⁾ oder -OH sein kann, um ein Aminoxid oder Hydroxylamin zu bilden, und worin wenigstens ein Teil der Substituenten R₇ bis R₁₂ dieses Z eine Polyhydroxyalkyl-amin-Funktionalität enthalten muß, die sich aus der Kondensation eines Amins oder NH₃ und einer Ketose oder Aldose und nachfolgender Reduktion zu einem Amin oder einer anderen Alkylamino-Polyhydroxy-Verbindung mit 3 bis 8 Kohlenstoffatomen ergibt;
W₂ für jede der genannten Einheiten aus der Gruppe, bestehend aus Wasserstoff, einem Acylrest, 3-Allyloxy-2-hydroxypropyl-, 3-Benzyloxy-2-hydroxypropyl-, 3-Alkylbenzyloxy-2-hydroxypropyl-, 3-Phenoxy-2-hydroxypropyl-, 3-Alkylphenoxy-2-hydroxypropyl-, 3-Butoxy-2-hydroxypropyl-, 3-Alkyloxy-2-hydroxypropyl, 2-Hydroxyalkyl-, 2-Hydroxy-2-phenylethyl-, 2-Hydroxy-2-alkylphenylethyl-, Benzyl-, Alkyl, Allyl, 2-Chlorpropenyl-, einem Kondensationsprodukt von Ethylenoxid, Propylenoxid, oder einer Mischung derselben, ausgewählt ist;
W₁ die Bedeutung von W₂ hat und zusätzlich dazu Natrium, Kalium, Tetraarylammonium, Tetraalkylammonium, Tetraalkylphosphonium oder Tetraarylphosphonium sein kann.

2. Zusammensetzung gemäß Anspruch 1, worin das wasserdispergierbare oder wasserlösliche Polymer und/oder Copolymer durch Umsetzung von Poly-4-vinylphenol-Polymer mit Formaldehyd und einem eine Polyhydroxyalkylamin-Funktionalität bereitstellenden Alkylamin hergestellt wird, das durch Kondensation eines Amins oder NH₃ mit einer Ketose oder Aldose und anschließender Reduktion zu einem Amin oder einer anderen Alkylaminohydroxy-Verbindung mit 3 bis 8 Kohlenstoffatomen synthetisiert wird.

3. Zusammensetzung gemäß Anspruch 2, worin das Tensid eine Mischung eines anionischen und eines nichtionischen Tensids ist.

4. Zusammensetzung gemäß Anspruch 3, worin das anionische Tensid ein Alkylsulfat mit 8 bis 18 Kohlenstoffatomen ist, und das nichtionische Tensid ein alkoxylierter, linearer Alkohol mit 8 bis 22 Kohlenstoffatomen ist.

5. Zusammensetzung gemäß Anspruch 4, worin das Alkylsulfat Natrium-2-ethylhexylsulfat ist, und der ethoxylierte, linearere Alkohol 8 bis 10 Kohlenstoffatome enthält.

6. Zusammensetzung gemäß Anspruch 5, die zusätzlich dazu genügend Wasser umfaßt, damit das wasserdispergierbare oder wasserlösliche Polymer und/oder Copolymer in einer Menge von 0,001 bis 5 Gew.-% der Zusammensetzung vorliegt(en), und die Tensid-Mischung in einer Menge von 0,001 bis 1 Gew.-% der Zusammensetzung vorliegt.

7. Zusammensetzung gemäß Anspruch 6, in der das Polymer und/oder Copolymer eine durchschnittliche Molmasse von 5000 - 15 000 hat und ein Mannich-Derivat von N-Methyl-glucamin, Formaldehyd und Poly-4-vinylphenol ist.

8. Zusammensetzung gemäß Anspruch 7, in der das wasserdispergierbare oder wasserlösliche Polymer und/oder Copolymer in einer Menge von 0,001 bis 1 Gew.-% der Zusammensetzung vorliegt(en).

9. Verfahren zur Behandlung einer Kunststoff-Oberfläche oder einer lackierten Oberfläche vor dem nachfolgenden Lackieren derselben, worin die Oberflächen durch Auftragen einer Reinigungslösung auf dieselben gereinigt und gespült und vor dem Lackieren getrocknet werden, dadurch gekennzeichnet, daß nach dem Reinigen und vor dem Trocknen die Oberflächen mit einer Zusammensetzung gemäß irgendeinem der Ansprüche 1-8 in Kontakt gebracht werden, in der die Konzentration des Polymers und/oder Copolymers 0,001 bis 5 Gew.-% und die Konzentration der Tensid-Komponente 0,001 bis 1 Gew.-% beträgt.

10. Verfahren gemäß Anspruch 9, worin nach dem Kontakt mit der wäßrigen Lösung, die das Polymer und/oder Copolymer enthält, die Oberfläche mit entionisiertem Wasser vor dem Trocknen gespült wird.

## Revendications

1. Composition adaptée à l'utilisation comme solution ou dispersion auxiliaire aqueuse de rinçage dans le traitement des surfaces de plastique ou peintes, ladite composition comprenant au moins un agent tensioactif et un polymère et/ou copolypère hydrodispersables ou hydrosolubles, dans laquelle ledit polymère et/ou ledit copolymère contiennent au moins un motif répété choisi dans le groupe constitué par : 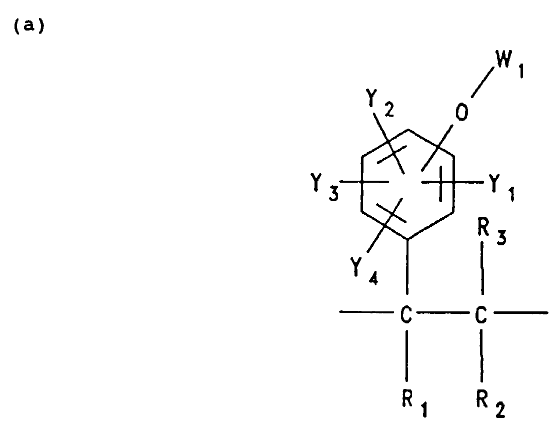 et 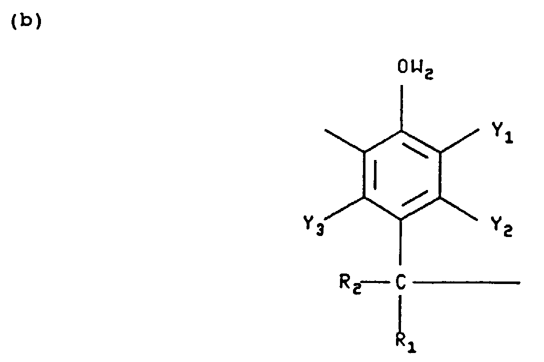 où :
chacun de R₁ à R₃ est choisi indépendamment, pour chacun desdits motifs, dans le groupe constitué par un hydrogène, un groupe alkyle ayant 1 à 5 atomes de carbone ou un groupe aryle ayant 6 à 18 atomes de carbone ;
chacun de Y₁ à Y₄ est indépendamment choisi, pour lesdits motifs, parmi un hydrogène, -CR₁₁R₅OR₆, -CH₂Cl, un groupe alkyle ou aryle ayant 1 à 18 atomes de carbone, ou Z, où au moins une fraction de Y₁ à Y₄ est Z ;
Z est 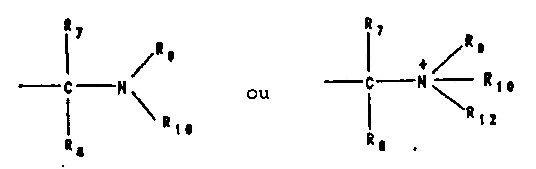
chacun de R₅ à R₁₂ est indépendamment choisi, pour chacun desdits motifs, dans le groupe constitué par un hydrogène, un fragment alkyle, aryle, hydroxyalkyle, aminoalkyle, mercaptoalkyle ou phosphoalkyle, si ce n'est que R₁₂ peut également être -O⁽⁻¹⁾ ou -OH pour former un oxyde d'amine ou une hydroxylamine et où au moins une fraction des substituants R₇ à R₁₂ dudit Z doit contenir une fonction polyhydroxyalkylamine résultant de la condensation d'une amine ou de NH₃ et d'un cétose ou d'un aldose, suivie d'une réduction en une amine ou un autre composé alkylaminopolyhydroxy ayant 3 à 8 atomes de carbone ;
W₂ est choisi, pour chacun desdits motifs, dans le groupe constitué par un hydrogène, un fragment acyle, 3-allyloxy-2-hydroxypropyle, 3-benzyloxy-2-hydroxypropyle, 3-alkylbenzyloxy-2-hydroxypropyle, 3-phénoxy-2-hydroxypropyle, 3-alkylphénoxy-2-hydroxypropyle, 3-butoxy-2-hydroxypropyle, 3-alkyloxy-2-hydroxypropyle, 2-hydroxyalkyle, 2-hydroxy-2-phényléthyle, 2-hydroxy-2-alkylphényléthyle, benzyle, alkyle, allyle, 2-chloropropényle, un produit de condensation de l'oxyde d'éthylène, de l'oxyde de propyle ou d'un de leurs mélanges ;
W₁ a la même signification que W₂ et peut de plus être le sodium, le potassium, un tétraarylammonium, un tétraalkylammonium, un tétraalkylphosphonium ou un tétraarylphosphonium.

2. Composition selon la revendication 1, dans laquelle ledit polymère et/ou ledit copolymère hydrodispersables ou hydrosolubles sont préparés par réaction d'un polymère poly-4-vinylphénol avec le formaldéhyde et une alkylamine fournissant une fonction polyhydroxyalkylamine, synthétisée par condensation d'une amine ou de NH₃ avec un cétose ou un aldose, suivie d'une réduction en une amine ou un autre composé alkylaminohydroxy ayant 3 à 8 atomes de carbone.

3. Composition selon la revendication 2, dans laquelle l'agent tensio-actif est un mélange d'un agent tensioactif anionique et d'un agent tensioactif non ionique.

4. Composition selon la revendication 3, dans laquelle ledit agent tensioactif anionique est un alkylsulfate ayant 3 à 18 atomes de carbone et ledit agent tensioactif non ionique est un alcool linéaire alcoxylé ayant 8 à 22 atomes de carbone.

5. Composition selon la revendication 4, dans laquelle ledit alkylsulfate est le 2-éthylhexylsulfate de sodium et ledit alcool linéaire éthoxylé contient 8 à 10 atomes de carbone.

6. Composition selon la revendication 5, comprenant de plus suffisamment d'eau pour que ledit polymère et/ou ledit copolymère hydrodispersables ou hydrosolubles soient présents en une proportion de 0,001 à 5 % du poids de la composition et ledit mélange tensioactif soit présent en une proportion de 0,001 à 1 % du poids de la composition.

7. Composition selon la revendication 6, dans laquelle ledit polymère et/ou ledit copolymère ont un poids moléculaire moyen de 5 000 à 15 000 et sont un dérivé de Mannich de la N-méthylglucamine, du formaldéhyde et d'un poly-4-vinylphénol.

8. Composition selon la revendication 7, dans laquelle ledit polymère et/ou ledit copolymère hydrodispersables ou hydrosolubles sont présents en une proportion de 0,001 à 1 % du poids de la composition.

9. Procédé pour le traitement des surfaces de plastique ou peintes avant leur mise en peinture ultérieure, dans lequel lesdites surfaces sont nettoyées et rincées par application d'une solution de nettoyage et séchées avant la mise en peinture, caractérisé en ce qu'après ledit nettoyage et avant ledit séchage, lesdites surfaces sont mises en contact avec une composition selon l'une quelconque des revendications 1 à 8, dans laquelle la concentration dudit polymère et/ou dudit copolymère est de 0,001 à 5 % en poids et la concentration dudit composant tensioactif est de 0,001 à 1 % en poids.

10. Procédé selon la revendication 9, dans lequel, après ledit contact avec ladite solution aqueuse contenant ledit polymère et/ou ledit copolymère, ladite surface est rincée avec de l'eau désionisée avant le séchage.
